# EUROPEAN PATENT SPECIFICATION

(11) **EP 4 466 599 B1**
(45) Date of publication and mention of the grant of the patent: **20.05.2026**
(21) Application number: 23712703.0
(22) Date of filing: 07.03.2023
(51) Int. Cl.: G06F 3/12

(54) **SYSTEM AND METHOD FOR COMBINING DATA SOURCES IN A PACKAGE PRINTING SYSTEM**
SYSTEM UND VERFAHREN ZUM KOMBINIEREN VON DATENQUELLEN IN EINEM PAKETDRUCKSYSTEM
SYSTÈME ET PROCÉDÉ DE COMBINAISON DE SOURCES DE DONNÉES DANS UN SYSTÈME D'IMPRESSION DE COLIS

(30) Priority: 07.03.2022 US 202263317176 P
(43) Date of publication of application: 27.11.2024
(73) Proprietor: Cryovac, LLC, Charlotte, NC 28208 (US)
(72) Inventor: CYMAN, Theodore F., Minneola, FL 34715 (US); MURZYNOWSKI, Alan Ronald, Grand Island, NY 14072 (US); KANFOUSH, Daniel Edward, Grand Island, NY 14072 (US); ROCCO, Frank J., Tonawanda, NY 14120 (US); MOSCATO, Anthony Vincent, Tonawanda, NY 14120 (US); CONIGLIO, Paul A., Amherst, NY 14051 (US)
(74) Representative: Uexküll & Stolberg
(86) International application number: PCT/US2023/014667
(87) International publication number: WO 2023/172525

(56) References cited:
- JP-A- 2020 033 029
- US-A1- 2012 279 409
- US-B2- 8 149 442

## Description

### BACKGROUND

The subject matter disclosed herein relates to systems and methods for printing on a plurality of packages and more particularly, a system and method that combine information from different data sources to print on one or more packages.

Printing systems have been developed for printing on labels wherein the labels are attached to packages that are to be shipped. Some such printing systems receive print commands using a label printing language. The print commands are divided into a plurality of blocks of commands, wherein each block is associated with a label to be printed. For each block of commands, a controller operates a printing device to print indicia on a label in accordance with the block of commands. Typically, the label is removably secured to a liner. After printing, the label may be released from the liner and applied to a corresponding package. Label printing systems are typically suitable for printing text, line art, and two-color bitmaps on labels. However, such label printing systems are generally not suitable for printing high quality grayscale or color images.

Further, having to print the label on a substrate attached to the liner and then removing from the liner to attach to the package may not be environmentally sustainable. For example, the liner is a waste product. Also, adhesively attaching the label to the package may affect the recyclability of the package, e.g., by reducing the repulpability of the package with the label and/or adhesive thereon.

JP 2020 033029 A discloses a system for printing comprising: a sensor sensing an identifier encoded on an order ID printed on a coversheet affixed on a package; a block selector that receives a plurality of blocks of print commands and selects a block of print commands from the plurality of blocks of print commands in accordance with the identifier; a label generator that generates a first image in accordance the selected block of print commands; a template processor that generates a second image with variable information, wherein a portion of the second image comprises the first image; and a print controller that operates a print system to print a second image on a label which is thereafter applied to the package. The print system utilizes laser printing.

US 8 149 442 B2 describes the use of templates in variable data printing.

US 2012/279409 A1 discloses a system for printing that, similarly to above-mentioned JP 2020 033029 A, without selecting a template based on a template identifier and with generating the second image in accordance with a template, and with printing the second image on a label which is thereafter applied to the package.

The discussion above is merely provided for general background information and is not intended to be used as an aid in determining the scope of the claimed subject matter.

### BRIEF DESCRIPTION

A method and system for printing in which a plurality of blocks of print commands and an identifier encoded in indicia on an object are received. A block of print commands is selected from a plurality of blocks of print commands in accordance with the identifier. A first image is generated in accordance with the selected block of print commands. A template is selected from a plurality of templates in accordance with a template identifier in the selected block and a second image is generated in accordance with the selected template. A portion of the second image comprises the first image. A print system comprising inkjet printheads is operated to print the second image on the object, wherein the object is a package loaded with one or more items to be shipped.

Preferred embodiments of the present invention are set out in the dependent claims.

This brief description of the invention is intended only to provide a brief overview of subject matter disclosed herein according to one or more illustrative embodiments, and does not serve as a guide to interpreting the claims or to define or limit the scope of the invention, which is defined only by the appended claims. This brief description is provided to introduce an illustrative selection of concepts in a simplified form that are further described below in the detailed description. This brief description is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

So that the manner in which the features of the invention can be understood, a detailed description of the invention may be had by reference to certain embodiments, some of which are illustrated in the accompanying drawings. It is to be noted, however, that the drawings illustrate only certain embodiments of this invention and are therefore not to be considered limiting of its scope, for the scope of the invention encompasses other equally effective embodiments. The drawings are not necessarily to scale, emphasis generally being placed upon illustrating the features of certain embodiments of the invention. In the drawings, like numerals are used to indicate like parts throughout the various views. Thus, for further understanding of the invention, reference can be made to the following detailed description, read in connection with the drawings in which:
FIGS. 1 and 2 are simplified isometric views of a system for printing on a package taken from opposite ends thereof;
FIG 3 is a block diagram of processing units that comprise a control system of the system for printing of FIGS. 1 and 2;
FIGS. 4 and 4A are examples of label printing commands received by the system for printing of FIGS. 1 and 2;
FIGS. 5A and 5B illustrate templates processed by the system for printing of FIGS. 1 and 2;
FIG. 6 shows the components of the control system of FIG. 3; and
FIG. 7 is a flowchart of steps undertaken by the control system of FIG. 3.

### DETAILED DESCRIPTION

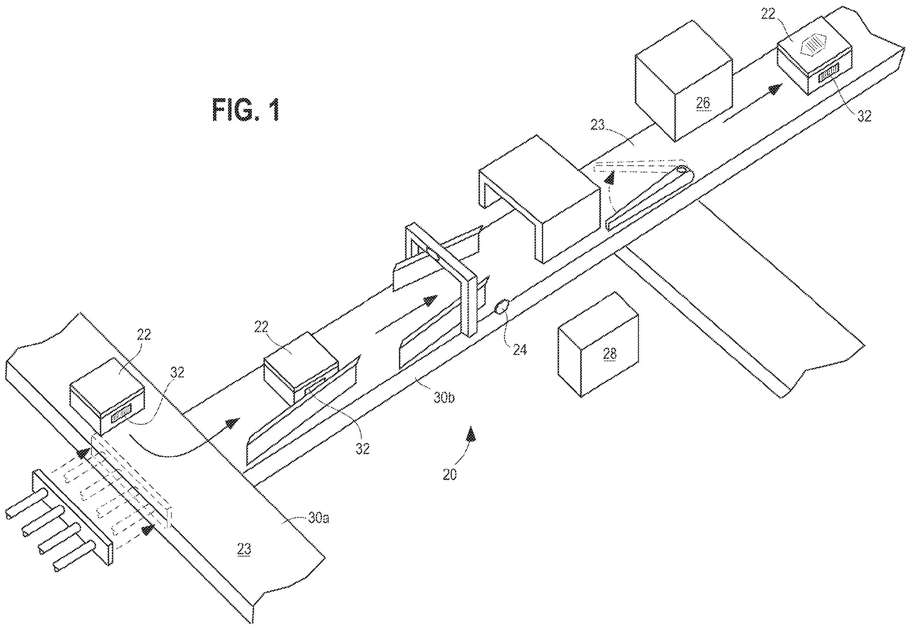

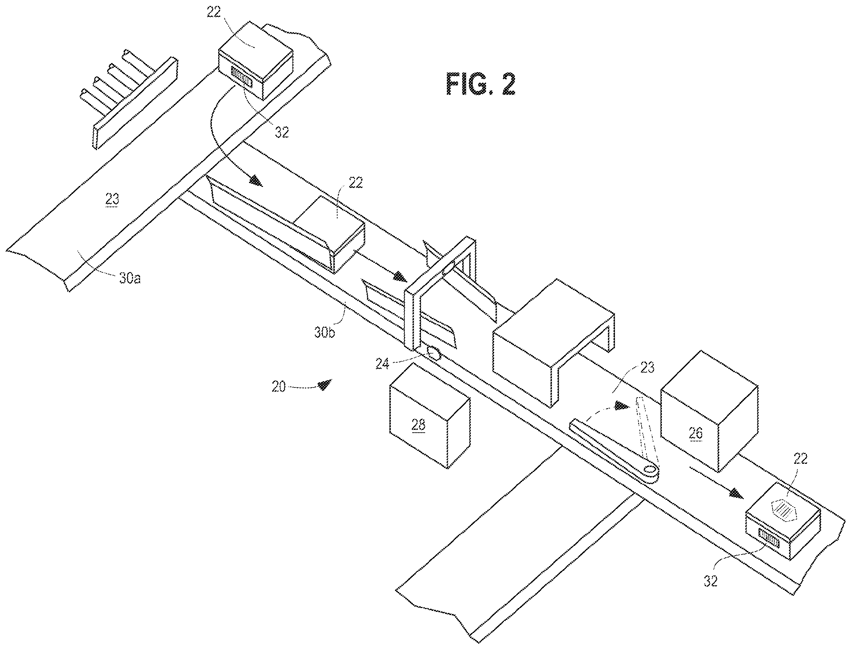

Referring to FIGS. 1 and 2, a system 20 for marking objects or packages, such as sealed boxes 22 that are loaded with one or more items to be shipped, includes a conveying system 23 for transporting one or more packages, such as boxes 22, a barcode sensor 24, a print system 26, and a control system 28. The conveying system 23 comprises at least one, and preferably, multiple conveyors (two conveyors 30a and 30b are in the illustrated embodiment) that move the boxes 22 in a continuous manner along one or more main transport paths to and past the barcode sensor 24 and the print system 26 in sequence. Each box 22 includes a barcode 32 encoded with a unique identifier that is associated with a recipient of the box. The barcode 32 is located on an exterior wall of the box in a predetermined region so that barcode sensor 24 will detect and scan the barcode 32 as the box 22 is conveyed thereby. The barcode 32 may be a one-dimensional barcode, a two-dimensional barcode (e.g., a QR code and the like), a sequence of alphanumeric and/or symbolic characters in a predetermined format, and the like. The system 20 may print a combination of customized content including indicia and high-quality images, based on information carried by the box 22. The indicia may be printed at a resolution lower than the images or at another resolution, including the same resolution.

Diverter gates, positioning apparatus, and other conveyor components are typically included as part of the conveying system 23 but are omitted from FIGS. 1 and 2 for clarity.

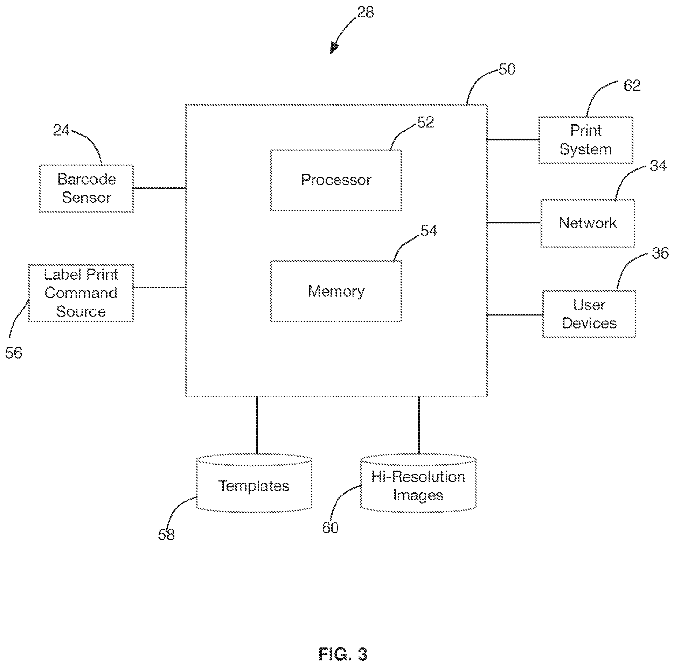

Referring also to FIG. 3, the control system 28 may be implemented using hardware, software, or firmware or combinations thereof. In the illustrated embodiment, the control system 28 may be implemented by one or more suitably programmed computer-based devices, some or each having a processing module and a memory. Each device may comprise, e.g., a desktop or laptop computer, a server, a device using one or more application specific integrated circuits (ASIC's) and/or field-programmable gate arrays (FPGA's), a tablet, a smartphone, etc. and/or combinations thereof. The control system 28 may be unitary or may be distributed across one or more networks. As seen in FIG. 3, the control system 28 is coupled to one or more network(s) 34 such as a local area network (LAN), a wide area network (WAN) such as the Internet, and the like. The control system 28 is also coupled to one or more user device(s) 36 such as a keyboard, a mouse, a display, a touchscreen, etc. Further, one or more of the user devices 36 may be coupled to the control system 28 directly via, for example, a serial connection, video connection (HDMI, VGA, etc.), and the like. In some cases, one or more of the user device(s) 36 may be coupled to control system 28 via the network 34. The control system 28 is responsive to commands supplied thereto by a user via the user device(s) 36. In the illustrated embodiment, the control system 28 is implemented by a single programmed device 50 having a processing module 52 and a memory 54. The memory 54 has stored therein, among other things, programming instructions executed by one or more processing modules 52 to implement the control system 28 as described herein.

The control system 28 receives a stream of label print commands developed using a label printing language from a label print command source 56. It should be apparent to one who has ordinary skill in the art that the stream of label print commands may be developed using, for example, Zebra Programming Language (ZPL) specified by Zebra Technologies of Lincolnshire, Illinois, Printer Command Language (PCL) specified by Hewlett Packard Company of Palo Alto, California, and the like. The stream of label print commands may be transmitted or provided to the control system 28 in any manner apparent to one who has ordinary skill in the art, e.g., via network 34, a local storage device, and the like. In some embodiments, upon receipt, the control system 28 stores the stream of label print commands in the memory 54 thereof.

As the box 22 traverses past the barcode sensor 24, the barcode sensor 24 reads the barcode 32 on the box 22 and provides the unique identifier encoded in the barcode 32 to the control system 28. As described in greater detail below, the control system 28 uses the unique identifier and the stream of label print commands to select a template from a template data store 58 and one or more images specified by the selected template from an image data store 60.

In addition, the control system 28 selects and processes a portion (or block) of the stream of label commands that is associated with the unique identifier encoded in the barcode 32 to generate a label bitmap. The label bitmap is a bitmap representation of a label that would be printed by a label printer if the label printer were presented with the selected block of the stream label print commands. Thereafter, the control system 28 combines the label bitmap and the one or more image(s) in accordance with position data specified by the template into a page (a composited image or content that combines the label bitmap and the one or more images) to be printed. The control system 28 uses the page to control the printing system 26 to print the page directly on a surface of the box 22 as the box is conveyed past the printing system 26.

The barcode sensor 24 and control system 28 operate in this manner to develop and print a page on all the boxes 22 loaded onto the conveying system 23.

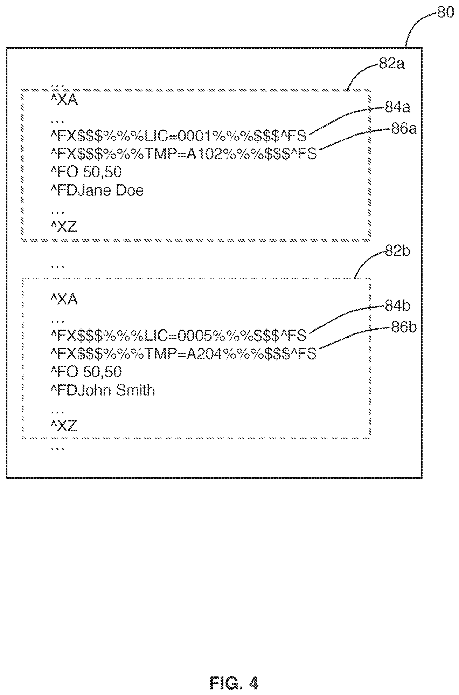

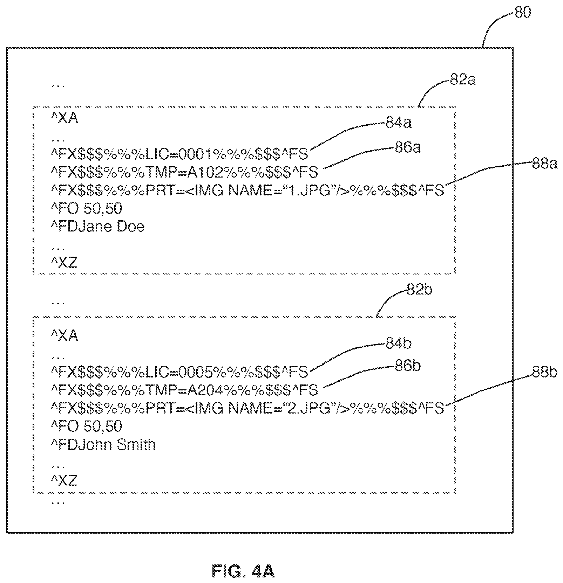

FIG. 4 is an example of a stream of label print commands 80 that may be received by the control system 28. The stream of label print commands 80 is divided into a plurality of blocks of print commands 82, only two of which 82a, 82b are shown, wherein each block of print commands 82 is associated with a particular box 22 (and thus the recipient of such box). In the example shown in FIG. 4, the start of each block of print commands 82 is indicated by a first predetermined text string ("^XA") and the end of each block print commands 82 is indicated by a second predetermined text string ("^XZ"). Further, each block of print commands 82 includes text strings that are label printing language commands and, if necessary, parameters for such commands that direct a label printer to undertake an action. For example, in the block of print commands 82a, the string "^FO 50,50" is a command "^FO" that specifies a field origin (i.e., position) with parameters "50,50," and "^FD Jane Doe" is a command "^FD" that specifies a field data with parameters "Jane Doe." A label printer that is responsive to print commands shown in the block of print commands 82a would, when presented with such commands, print "Jane Doe" in a portion of a label associated with the position coordinates "50,50."

Each block of print commands 82 also includes strings delimited and identified by "^FX" and "^FS" text strings that are readable by a label printer but otherwise would not cause a label printer to undertake any other action. One of ordinary skill in the art would understand such strings to be analogous to comment strings in a programming language. In the illustrated embodiment of the system 20, each block of print commands 82 includes two such comment strings. A first comment string 84 includes a first predetermined substring "$$$%%%LIC=" that is followed by a predetermined number of characters (in this case 4) that specify the unique identifier of the box on which a representation of the label specified by the commands in the block of print commands 82 is to be printed. Thus, in the example shown in FIG. 4, a representation of a label specified by the block of print commands 82a associated with the unique identifier "0001" is to be printed on the box 22, as encoded in the barcode on a corresponding box 22. Further, a representation of a label specified by the block of print commands 82b is to be printed on the box 22 that has the barcode 32 thereon that encoded with the unique identifier "0005.

Each block of print commands 82 also includes a second comment string 86 having a second predetermined substring "$$$%%%TMP=" followed by a predetermined number of characters that identify a template that is to be used to generate the page that is to be printed on the box 22 associated with the unique identifier specified by the first comment string 84. Thus, the box 22 associated with the unique identifier "0001" specified in the first comment string 84a of the block of print commands 82a is to have content printed thereon developed in accordance with the template "A102" specified by the second comment string 86a. Similarly, another box 22 associated with the unique identifier "0005" specified in the first comment string 84b of the block 82b is to have content printed thereon developed in accordance with the template "A204" specified by the second comment string 86b.

The template identified in each block of print commands 82 is associated with a file (or other data) in the template data store 58 (FIG. 3). Such file includes information regarding the content or page printed on the box 22. In some embodiments, such content or page may be represented as an image, a page description file, or any other representation format apparent to one who has ordinary skill in the art. The information regarding such page includes dimensions (e.g., in pixels) of the page, a position within the page where a bitmap representation of the label specified by the commands in the block of print commands 82 is to be located, references to one or more other image(s) that are to be included in the page, and the position in the page of each such image. The references to the one or more other image(s) may be, for example, an identifier associated with a file (or other data) in the image data store 60. The contents of such file may be in any image format apparent to one who has ordinary skill in the art including JPEG, PNG, PDF, RAW, and the like.

Referring to FIG. 4A, in some embodiments, each block of print commands 82 may include one or more additional comment string(s) 88 that specify, for example, data that may be used to customize text and/or image content that comprises the page printed on the box 22 in accordance with the template specified in the second comment string 86. For example, the template may specify one or more region(s) of the page in which text and/or image(s) in addition to the label that is/are customized for the recipient of the box on which the page is printed. The additional comment string(s) may specify such customized text and/or images. The comment string(s) 88 may include, for example, JSON, XML, or other data formats to specify a text string and/or image to be printed. The comment string 88 may specify an image by providing a name or a reference (e.g., a URL or a file path) to an image file in which such image is stored. The image file may be one that is stored in the images data store 60 or on a device accessible via the network 34.

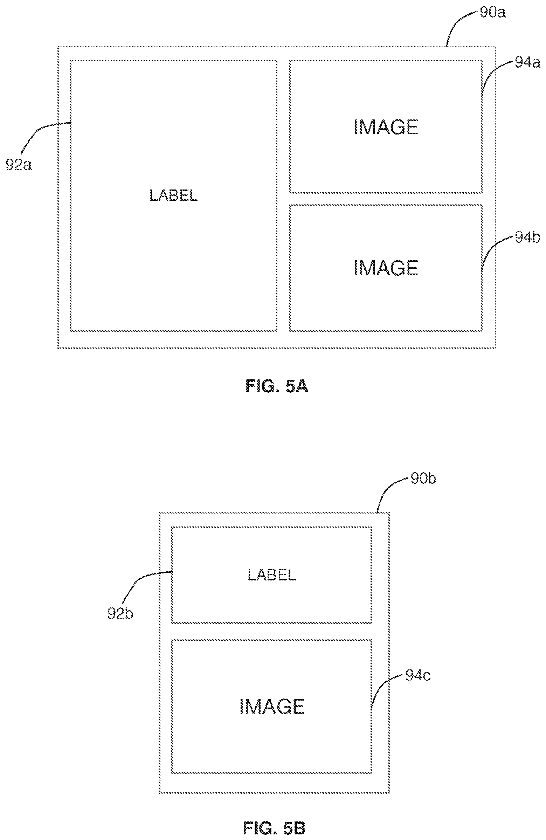

FIGS. 5A and 5B illustrate two templates 90a and 90b that may be specified by the data in the stores 58, 60 and used by the system 20. Each template 90 specifies the contents of a page. The template 90a specifies a page having a portion 92b reserved for a bitmap of a label and two portions 94a and 94b reserved for non-label content such as text and/or images. Similarly, the template 90b specifies a page having a portion 92b reserved for a bitmap of a label and a portion 94c reserved for an image. In some embodiments, the templates 90 are encoded as PDF files with annotations (or other data) that specify the location and dimensions of the region in which the bitmap of the label 92 is to be merged. Preferably, although not necessarily, the images comprise high-resolution multi-color images.

Although the templates 90a and 90 illustrated in FIGS. 5A and 5B specify non-intersecting portions 92 and 94 reserved for the label and the image(s), respectively, it should be apparent that some of these portions may overlap. For example, the template 90 may specify a label portion 92 that overlays the image portion 94. In such embodiments, the label portion 92 may occupy an area that is larger or smaller or equal in dimension to the image portion 94. It will be apparent to one who has ordinary skill in the art that the template 90 may specify the order in which the portions 92 and/or 94 are overlaid. For example, the template 90 may specify that the label portion is to be printed on top of the image so that sections of the label overprint or block corresponding sections of the image. If the template 90 specifies multiple portions 94 for corresponding images, the template 90 may also specify the order in which such images are to be printed so that a section of one image overlays a section of another image.

In other embodiments, the templates 90 are encoded and stored in an image file wherein each template comprises the image(s) 94 encoded therein and in which values of pixels associated with the region 92 reserved for the label are set to a predetermined background value (e.g., values associated with a transparent pixel or a white pixel). In such embodiments, the template 90 may also comprise text or other metadata that specifies the coordinates of the region(s) 92 of the template that are reserved for the bitmap of the label. Other ways of specifying the regions 92, 94 and the contents thereof apparent to one who has ordinary skill in the art may be used.

In still other embodiments, each template 90 may be encoded as a text file (e.g., an XML file, a JSON file, etc.) that specifies the dimensions of the page and the location and dimensions of the portion 92 reserved for the bitmap of the label. In addition, for each portion 94 reserved for an image, the text file specifies an image identifier (such as a file name) that can be used to retrieve image data from the image data store 60 and the coordinates of the page where such image is to be placed.

Referring also to FIG. 4A, it should be apparent to one who has ordinary skill in the art that the content of printed in the region 92 reserved for the label may vary in accordance with the recipient of the object on which such region is printed. However, first and second blocks of print commands 82 for first and second recipients, respectively, may specify an identical template 90 using the second comment string 86, yet the text and/or image content printed on first and second boxes in the non-label regions 94 specified by the template 90 may also be different and customized for the recipient in accordance with the data specified by the additional comment string(s) 88.

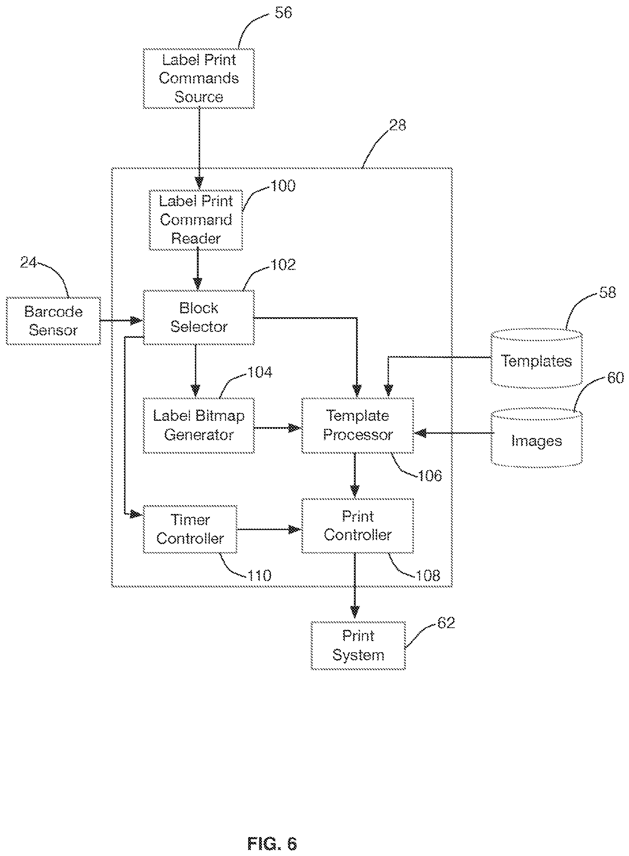

FIG. 6 is a block diagram that shows the components of one embodiment of the control system 28. As described in greater detail below, the control system 28 includes a label print command reader 100, a block selector 102, a label bitmap generator 104, a template processor 106, a print controller 108, and a timer controller 110.

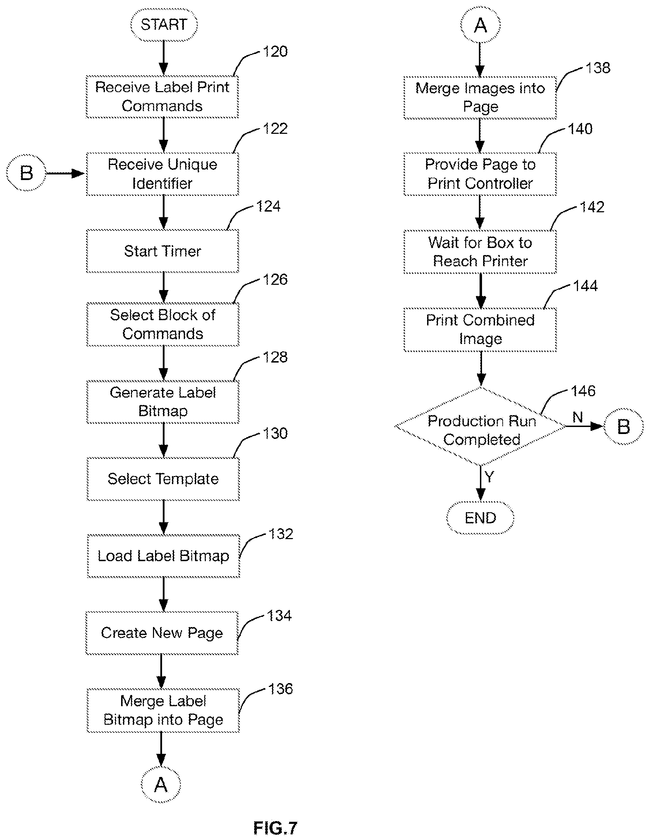

FIG. 7 shows a flowchart of the steps undertaken by the control system 28 to generate and print a page on one or more boxes 22 (FIGS. 1 and 2) during a production run. Each step of the control system shown in FIG. 6 may be implemented by software, hardware, or firmware as necessary or desirable. Referring to FIGS. 6 and 7, at step 120, the label print command reader 100 receives from the label print command source 56 a stream of label print commands 80 comprising a plurality of blocks 82 wherein the stream is associated with the production run.

At step 122, the block selector 102 receives from the barcode sensor 24 the unique identifier encoded in the barcode 32 (FIGS. 1 and 2) applied to the box 22 (FIGS. 1 and 2) as the box 22 is conveyed past the barcode sensor 24.

At step 124, the block selector directs the timer controller 110 to start a timer and generate a signal (e.g., an interrupt) when a predetermined amount of time has elapsed.

In addition, at step 126, the block selector 102 retrieves a block of label print commands 82 (FIG. 4) that is associated with the unique identifier received at step 122 from the stream of label print commands 80 (FIG. 4) that was received at the step 120. As described above, the block selector 102 compares the unique identifier received at step 122 with the identifier encoded in the first comment string 84 (FIG. 4) of each block of label print commands 82 received at step 120 and selects the block of label print commands 82 having an identifier in the first comment string 84 (FIG. 4) that matches the unique identifier.

Also at step 126, the block selector 102 supplies the selected block of label print commands 82 to the label bitmap generator 104. In addition, the block selector 102 extracts the template identifier encoded therein from the second comment string 86 (FIG. 4) and provides such template identifier to the template processor 106.

At step 128, the label bitmap generator 104 interprets the block of label print commands 82 and creates a bitmap representation of the label in accordance with such block. Thereafter, the step 128 causes the label bitmap generator 104 to provide the generated bitmap representation to the template processor 106.

At step 130, the template processor 106 uses the template identifier provided by the block selector 102 at the step 126 to retrieve from the template data store 58 the template 90 associated with such template identifier.

At step 132, the template processor 106 loads the label bitmap generated by the label bitmap generator 104 at the step 128.

At step 134, the template processor 106 creates a new page having dimensions specified by template 90 retrieved at the step 126. In some cases, the values of the pixels of the new page are set to a transparent or background color value. In some embodiments, the new page may include images specified by the template in one or more of the regions 94 reserved for such images and values the pixels of the regions 92 set to a transparent or background color value.

At step 136, the template processor 106 merges the label bitmap into the page in accordance with the portion 92 specified by the template 90. In some embodiments, the label bitmap is a binary image, and the page is a multi-color image having four (or more) color planes, wherein each color plane is a multi-bit image (i.e., each pixel of each color plane is represented by a plurality of bits). In such cases, the template processor 106 converts the bitmap label image into a multi-bit image and merges the multi-bit image into one of the color planes of the page. Typically, the color plane of the page into which the multi-bit image is merged is the color plane that will be printed using black ink. However, it should be apparent that the multi-bit image may be merged into a color plane that will be printed with an ink different than a black ink or that the multi-bit image may be merged into a plurality of color planes.

After the multi-bit representation of the label bitmap has been merged into the page, as described above, at step 138 the template processor 106 retrieves any other images specified by the template 90 from the images data store 60 and merges the retrieved images into the page in accordance with portion(s) 94 reserved for such image(s) as specified by the template 90 if such images are not already present in the page when the page was created.

At step 140, the page generated by the template processor 106 is provided to the print controller 108.

At step 142, the print controller 108 waits to receive the signal from the timer controller 110 that the predetermined amount of time specified by the block selector 102 at step 124 has elapsed. Such predetermined amount of time is selected in accordance with the speed with which the conveying system 23 is operated and the expected amount of time for the box 22 to be conveyed from the barcode sensor 24 to a position for printing by the printing system 26.

In response to the signal from the timer, the print controller 108 at step 144 operates the print system 62 to print the page on a surface of the box 22 as such box is conveyed past the print system 62. In some embodiments, the print system 62 is a multi-color inkjet printing system. In such embodiments, the print controller 108 creates halftone bitmaps of each color plane of the page to be printed and supplies such bitmaps to the print system 62. In some embodiments, the print controller 108 generates signals to the individual print heads of the print system 62 in accordance with the halftone bitmaps to cause such print heads to eject one or more colors of ink onto the box 22 to print the page thereon.

At step 146, the control system 28 checks whether a signal has been received, for example, via the network 34 or the user device 36 that production is completed. If so, the control system 28 exits. Otherwise, the control system 28 returns to the step 122 to wait for receipt of another unique identifier.

In some embodiments, at the step 126 the block selector 102 stores the selected block of label print commands 82 in a memory or data store shared by block selector 102 and the label bitmap generator 104, the block selector 102 stores the template identifier from the selected block of label print commands 82 in a memory or data store shared by the block selector 102 and the template processor 106, the label bitmap generator 104 stores the label bitmap generated thereby in a memory or data store shared by the label bitmap generator 104 and the template processor 106, and the template processor 106 stores the page into a memory or data store shared by the template processor 106 and the print controller 108. In such embodiments, the memory or data stores are organized so that the data (i.e., block of label commands, label bitmap, template identifier, page, etc.) are stored in such shared memory or data store in a sequence in accordance with an order which such data were generated (and, thus, in accordance with an order in which blocks of label commands were selected by the block selector). It should be apparent to one who has skill in the art that, as a result, the block selector 102, the label bitmap generator 104, the template processor 106, and the print controller 108 operate in synchrony with the order in which the barcode sensor 24 provides unique identifiers encoded in barcodes 32 on boxes 22 as such boxes traverse past the barcode sensor 24. It should be apparent that a FIFO buffer, a circular list, a linked list, or other data structure may be used to organize such memory or data store.

Referring once again to FIG. 1, in one embodiment, the conveying system 23 operates at a speed between approximately 0.41 and approximately 0.46 m/s (approximately 80 and approximately 90 feet per minute) to move the boxes 22 past the print system 26. In other embodiments, the conveying system 23 operates at a speed between approximately 0.61 and approximately 0.76 m/s (approximately 120 and approximately 150 feet per minute). Further, in some embodiments, the conveying system 23 operates to move between approximately 30 and approximately 40 boxes per minute past the print system 26. The print system 26 includes printheads (e.g., inkjet printheads) that are operated by the print controller 108 to print both label and non-label content on the boxes as described in the foregoing as the boxes 22 are conveyed past the print system at these speeds.

It should be apparent to those who have skill in the art that any combination of hardware and/or software may be used to implement components of the system 20 described herein. It will be understood and appreciated that one or more of the processes, sub-processes, and process steps described in connection with FIGS. 1-3, 6, and 7 may be performed by hardware, software, firmware or a combination of hardware, software, and firmware on one or more electronic or digitally-controlled devices. The software or firmware may reside in a memory (not shown) in a suitable electronic processing component or system such as, for example, one or more of the functional systems, controllers, devices, components, modules, or sub-modules depicted in FIG. 6 The software memory may include an ordered listing of executable instructions for implementing logical functions (that is, "logic" that may be implemented in digital form such as digital circuitry or source code, or in analog form such as analog source such as an analog electrical, sound, or video signal). The instructions may be executed within a processing module or controller (e.g., the control system 28, the label print command reader 100, the block selector 102, the label bitmap generator 104, the template processor 106, the print controller 108, and the timer controller 110, etc.), which includes, for example, one or more microprocessors, general purpose processors, combinations of processors, digital signal processors (DSPs), field programmable gate arrays (FPGAs), application-specific integrated circuits (ASICs), and/or graphics processing units (GPUs). Further, the schematic diagrams describe a logical division of functions having physical (hardware, software, and/or firmware) implementations that are not limited by architecture or the physical layout of the functions. The example systems described in this application may be implemented in a variety of configurations and operate as hardware/software/firmware components in a single hardware/software/firmware unit, or in separate hardware/software/firmware units.

Depending on certain implementation requirements, the embodiments described can be implemented using a non-transitory storage medium such as a digital storage medium, for example, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments disclosed herein a data carrier having electronically readable control signals, which are capable of cooperating with a processor, a controller, or a programmable computer system, such that at least one of the methods described herein is performed.

Generally, embodiments disclosed herein can be implemented as a computer program product with a program code, the program code being operative for performing at least one of the methods disclosed herein when the computer program product runs on a computer. The program code may, for example, be stored on a machine-readable carrier.

Other embodiments comprise the computer program for performing one of the methods described herein, stored on a machine-readable carrier.

In other words, an embodiment, therefore, may include a computer program having a program code for performing one of the methods described herein, when the computer program runs on a processor, a controller, and/or a computer.

A further embodiment of the system described herein is, therefore, a storage medium (or a data carrier, or a computer-readable medium) comprising, stored thereon, the computer program for performing at least one of the methods described herein when it is performed by a processor. The data carrier, the digital storage medium or the recorded medium are typically tangible and/or non-transitory. A further embodiment of the present invention is an apparatus as described herein comprising a processor and the storage medium.

A further embodiment of the system describe herein is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment comprises an apparatus or a system configured to transfer (for example, electronically or optically) a computer program for performing at least one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of some or all of the methods described herein. In some embodiments, a field programmable gate array may cooperate with a microprocessor in order to perform one of the methods described herein. Generally, the methods are preferably performed by any hardware apparatus.

While particular embodiments of the present invention have been illustrated and described, it would be apparent to those skilled in the art that various other changes and modifications can be made and are intended to fall within the spirit and scope of the present disclosure. Furthermore, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.

The use of the terms "a" and "an" and "the" and similar references in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

Numerous modifications to the present disclosure will be apparent to those skilled in the art in view of the foregoing description. It should be understood that the illustrated embodiments are exemplary only and should not be taken as limiting the scope of the disclosure.

This written description uses examples to disclose the invention and also to enable any person skilled in the art to practice the invention, including making and using any devices or systems and performing any incorporated methods. The patentable scope of the invention is defined by the accompanying claims

## Claims

1. A method of printing comprising the steps of:
receiving (120) a plurality of blocks of print commands (82);
receiving (122) an identifier encoded in indicia on an object (22);
selecting (126) a block of print commands from the plurality of blocks of print commands (82) in accordance with the identifier;
generating (128) a first image in accordance with the selected block of print commands;
selecting (130) a template (90) from a plurality of templates in accordance with a template identifier in the selected block;
generating (132, 134, 136) a second image in accordance with the selected template, wherein a portion of second image comprises the first image; and
operating (140, 142, 144) a print system (26, 62), comprising inkjet printheads, to print the second image on the object, wherein the object is a package loaded with one or more items to be shipped.

2. The method of claim 1, wherein generating the second image further includes selecting a third image, wherein the second image further comprises the third image.

3. The method of claim 2, wherein the first image is generated in accordance with a recipient of the object.

4. The method of claim 3, wherein a first block of print commands and a second block of print commands comprise the plurality of blocks of print commands, the template is specified by both the first block of print commands and the second block of print commands, and the third image is selected in accordance with the recipient of the object.

5. The method of claim 2, wherein at least a portion of third image overlays the first image.

6. The method of claim 1, wherein the template identifier is specified in a comment string of the print commands.

7. The method of claim 6, wherein the print commands are developed in accordance with the Zebra Printing Language.

8. The method of claim 1, wherein receiving the identifier further includes the step of conveying the object past a sensor that reads the identifier, and wherein printing the second image includes conveying the object past a print system.

9. A system (20) for printing comprising:
a sensor (34) that senses an identifier encoded in indicia on an object (22);
a block selector (102) that receives a plurality of blocks of print commands (82) and selects a block of print commands (82a, 82b) from the plurality of blocks of print commands (82) in accordance with the identifier and selects a template from a plurality of templates in accordance with a template identifier in the selected block;
a label generator (104) that generates a first image in accordance with the selected block of print commands;
a template processor (106) that generates a second image in accordance with the selected template, wherein a portion of second image comprises the first image; and
a print controller (108) that operates a print system (26, 62), comprising inkjet printheads, to print the second image on the object (22), wherein the object (22) is a package loaded with one or more items to be shipped.

10. The system of claim 9, wherein the template processor (106) selects a third image and the second image includes the third image.

11. The system of claim 10, wherein label generator (104) generates the first image in accordance with a recipient of the object.

12. The system of claim 11, wherein a first block of print commands and a second block of print commands comprise the plurality of blocks of print commands, the template is specified by both the first block of print commands and the second block of print commands, and the template processor (106) selects third image in accordance with the recipient of the object.

13. The system of claim 10, wherein at least a portion of third image overlays the first image.

14. The system of claim 9, wherein the template identifier is specified in a comment string of the print commands.

15. The system of claim 9, further including a conveying system (23) that conveys the object (22) past the sensor (34) as the sensor senses (34) the identifier, and wherein the conveying system (23) conveys the object (22) past the print system (26, 62) as the print system prints the second image.

## Patentansprüche

1. Druckverfahren mit den Schritten:
Empfangen (120) einer Mehrzahl von Druckbefehl-Blöcken (82),
Empfangen (122) einer Kennung, die in Zeichen auf einem Objekt (22) kodiert ist,
Auswählen (126) eines Druckbefehl-Blocks aus der Mehrzahl von Druckbefehl-Blöcken (82) nach Maßgabe der Kennung,
Erzeugen (128) eines ersten Bildes nach Maßgabe des ausgewählten Druckbefehl-Blocks,
Auswählen (130) einer Vorlage (90) aus einer Mehrzahl von Vorlagen nach Maßgabe einer Vorlagenkennung in dem ausgewählten Block,
Erzeugen (132, 134, 136) eines zweiten Bildes nach Maßgabe der ausgewählten Vorlage, wobei ein Bereich des zweiten Bildes das erste Bild enthält, und
Betreiben (140, 142, 144) eines Drucksystems (26, 62), das Tintenstrahldruckköpfe enthält, um das zweite Bild auf das Objekt zu drucken, wobei das Objekt ein Paket ist, in dem eine oder mehrere ausliefernde Waren verpackt sind.

2. Verfahren nach Anspruch 1, wobei das Erzeugen des zweiten Bildes weiter beinhaltet, ein drittes Bild auszuwählen, wobei das zweite Bild weiterhin das dritte Bild enthält.

3. Verfahren nach Anspruch 2, wobei das erste Bild nach Maßgabe eines Empfängers des Objekts erzeugt wird.

4. Verfahren nach Anspruch 3, wobei ein erster Druckbefehl-Block und ein zweiter Druckbefehl-Block die Mehrzahl von Druckbefehl-Blöcken umfassen, wobei die Vorlage durch den ersten Druckbefehl-Block und den zweiten Druckbefehl-Block spezifiziert ist und wobei das dritte Bild nach Maßgabe des Empfängers des Objekts ausgewählt wird.

5. Verfahren nach Anspruch 2, wobei wenigstens ein Bereich des dritten Bildes über dem ersten Bild liegt.

6. Verfahren nach Anspruch 1, wobei die Vorlagenkennung in einer Kommentar-Zeichenkette der Druckbefehle spezifiziert ist.

7. Verfahren nach Anspruch 6, wobei die Druckbefehle in der Zebra-Druckersprache ausgedrückt sind.

8. Verfahren nach Anspruch 1, wobei das Empfangen der Kennung weiterhin den Schritt beinhaltet, das Objekt vorbei an einem Sensor zu transportieren, der die Kennung abliest, und wobei das Drucken des zweiten Bildes beinhaltet, das Objekt entlang eines Drucksystems zu transportieren.

9. Drucksystem (20) mit:
einem Sensor (34), der eine in Zeichen auf einem Objekt (22) kodierte Kennung erfasst,
einem Block-Auswähler (102), der eine Mehrzahl von Druckbefehl-Blöcken (82) empfängt und einen Druckbefehlblock (82a, 82b) aus der Mehrzahl von Druckbefehl-Blöcken (82) nach Maßgabe der Kennung auswählt und eine Vorlage aus einer Mehrzahl von Vorlagen nach Maßgabe einer Vorlagenkennung in dem ausgewählten Block auswählt,
einem Aufschriftgenerator (104), der ein erstes Bild nach Maßgabe des ausgewählten Druckbefehl-Blocks erzeugt,
einem Vorlagenprozessor (106), der ein zweites Bild nach Maßgabe der ausgewählten Vorlage erzeugt, wobei ein Bereich des zweiten Bildes das erste Bild enthält, und
einer Druckersteuerung (108), die ein Drucksystem (26, 62), das Tintenstrahldruckköpfe enthält, zum Drucken des zweiten Bildes auf das Objekt (22) betreibt, wobei das Objekt (22) ein Paket ist, in dem eine oder mehrere auszuliefernde Waren verpackt sind.

10. System nach Anspruch 9, wobei der Vorlagenprozessor (106) ein drittes Bild auswählt und das zweite Bild das dritte Bild enthält.

11. System nach Anspruch 10, wobei der Aufschriftgenerator (104) das erste Bild nach Maßgabe eines Empfängers des Objekts erzeugt.

12. System nach Anspruch 11, wobei ein erster Druckbefehl-Block und ein zweiter Druckbefehl-Block die Mehrzahl von Druckbefehl-Blöcken umfassen, wobei die Vorlage durch den ersten Druckbefehl-Block und den zweiten Druckbefehl-Block spezifiziert ist und wobei der Vorlagenprozessor (106) das dritte Bild nach Maßgabe des Empfängers des Objekts auswählt.

13. System nach Anspruch 10, wobei wenigstens ein Bereich des dritten Bildes über dem ersten Bild liegt.

14. System nach Anspruch 9, wobei die Vorlagenkennung in einer Kommentarzeilenkette der Druckbefehle spezifiziert ist.

15. System nach Anspruch 9, das weiter eine Förderanlage (23) aufweist, die das Objekt (22) an dem Sensor (34) vorbei befördert, während der Sensor (34) die Kennung erfasst, und wobei die Förderanlage (23) das Objekt (22) an dem Drucksystem (26, 62) entlang befördert, während das Drucksystem das zweite Bild druckt.

## Revendications

1. Procédé d'impression comprenant les étapes consistant à:
recevoir (120) une pluralité de blocs d'instructions d'impression (82);
recevoir (122) un identifiant codé en indices sur un objet (22);
sélectionner (126) un bloc d'instructions d'impression parmi la pluralité de blocs d'instructions d'impression (82) conformément à l'identifiant;
générer (128) une première image conformément au bloc d'instructions d'impression sélectionné;
sélectionner (130) un modèle (90) parmi une pluralité de modèles conformément à un identifiant de modèle dans le bloc sélectionné;
générer (132, 134, 136) une deuxième image conformément au modèle sélectionné, dans lequel une partie de la deuxième image comprend la première image; et
faire fonctionner (140, 142, 144) un système d'impression (26, 62), comprenant des têtes d'impression à jet d'encre, pour imprimer la deuxième image sur l'objet, dans lequel l'objet est un emballage chargé d'un ou plusieurs articles à expédier.

2. Procédé selon la revendication 1, dans lequel la génération de la deuxième image comporte en outre la sélection d'une troisième image, dans lequel la deuxième image comprend en outre la troisième image.

3. Procédé selon la revendication 2, dans lequel la première image est générée conformément à un destinataire de l'objet.

4. Procédé selon la revendication 3, dans lequel un premier bloc d'instructions d'impression et un second bloc d'instructions d'impression comprennent la pluralité de blocs d'instructions d'impression, le modèle est spécifié à la fois par le premier bloc d'instructions d'impression et le second bloc d'instructions d'impression, et la troisième image est sélectionnée conformément au destinataire de l'objet.

5. Procédé selon la revendication 2, dans lequel au moins une partie de la troisième image recouvre la première image.

6. Procédé selon la revendication 1, dans lequel l'identifiant de modèle est spécifié dans une chaîne de commentaires des instructions d'impression.

7. Procédé selon la revendication 6, dans lequel les instructions d'impression sont développées conformément au langage d'impression Zebra.

8. Procédé selon la revendication 1, dans lequel la réception de l'identifiant comporte en outre l'étape consistant à transporter l'objet au-delà d'un capteur qui lit l'identifiant, et dans lequel l'impression de la deuxième image comporte le transport de l'objet au-delà d'un système d'impression.

9. Système (20) d'impression comprenant:
un capteur (34) qui détecte un identifiant codé en indices sur un objet (22);
un sélecteur de bloc (102) qui reçoit une pluralité de blocs d'instructions d'impression (82) et sélectionne un bloc d'instructions d'impression (82a, 82b) parmi la pluralité de blocs d'instructions d'impression (82) conformément à l'identifiant et sélectionne un modèle parmi une pluralité de modèles conformément à un identifiant de modèle dans le bloc sélectionné;
un générateur d'étiquette (104) qui génère une première image conformément au bloc sélectionné d'instructions d'impression;
un processeur de modèle (106) qui génère une deuxième image conformément au modèle sélectionné, dans lequel une partie de la deuxième image comprend la première image; et
un dispositif de commande d'impression (108) qui fait fonctionner un système d'impression (26, 62), comprenant des têtes d'impression à jet d'encre, pour imprimer la deuxième image sur l'objet (22), dans lequel l'objet (22) est un emballage chargé d'un ou plusieurs articles à expédier.

10. Système selon la revendication 9, dans lequel le processeur de modèle (106) sélectionne une troisième image et la deuxième image comporte la troisième image.

11. Système selon la revendication 10, dans lequel le générateur d'étiquette (104) génère la première image conformément à un destinataire de l'objet.

12. Système selon la revendication 11, dans lequel un premier bloc d'instructions d'impression et un second bloc d'instructions d'impression comprennent la pluralité de blocs d'instructions d'impression, le modèle est spécifié à la fois par le premier bloc d'instructions d'impression et le second bloc d'instructions d'impression, et le processeur de modèle (106) sélectionne une troisième image conformément au destinataire de l'objet.

13. Système selon la revendication 10, dans lequel au moins une partie de la troisième image recouvre la première image.

14. Système selon la revendication 9, dans lequel l'identifiant de modèle est spécifié dans une chaîne de commentaires des instructions d'impression.

15. Système selon la revendication 9, comportant en outre un système de transport (23) qui transporte l'objet (22) au-delà d'un capteur (34) lorsque le capteur (34) détecte l'identifiant, et dans lequel le système de transport (23) transporte l'objet (22) au-delà du système d'impression (26, 62) lorsque le système d'impression imprime la deuxième image.
